# EUROPEAN PATENT SPECIFICATION

(11) **EP 1 956 131 B1**
(45) Date of publication and mention of the grant of the patent: **07.12.2011**
(21) Application number: 06822474.0
(22) Date of filing: 27.10.2006
(51) Int. Cl.: D06C 3/06, B29C 53/24, B29C 53/28, B29C 55/18, D04H 1/72

(54) **SHEET PROCESSING APPARATUS AND PROCESS OF PRODUCING SHEET**
VORRICHTUNG ZUR VERARBEITUNG EINER BAHNWARE SOWIE VERFAHREN ZUR HERSTELLUNG EINER BAHNWARE
APPAREIL DE TRAITEMENT DE FEUILLE EN CONTINU ET PROCEDE DE FABRICATION DE FEUILLE EN CONTINU

(30) Priority: 01.12.2005 JP 2005348020; 23.10.2006 JP 2006288019
(43) Date of publication of application: 13.08.2008
(73) Proprietor: Kao Corporation, Chuo-ku Tokyo 103-8210 (JP)
(72) Inventor: MORITA, Shinnosuke, c/o Kao Corporation, Haga-gun Tochig 321-3497 (JP); ANDO, Kenji, c/o Kao Corporation, Haga-gun Tochigi 321-3497 (JP)
(74) Representative: Vossius & Partner
(86) International application number: PCT/JP2006/321513
(87) International publication number: WO 2007/063661

(56) References cited:
- EP-A- 0 411 857
- WO-A-2004/020174
- JP-A- 08 300 498
- JP-A- 09 234 221
- JP-A- 2003 073 967
- JP-A- 2003 153 946
- JP-A- 2005 111 908
- US-A- 4 285 100
- US-B1- 6 726 870
- US-B1- 6 953 510

## Description

### Technical Field

The present invention relates to a sheet processing apparatus for processing a sheet material such as imparting stretchability or shaping three-dimensionally, a process of producing a sheet, and a process of producing a pants-type or pull-on garment.

### Background Art

A variety of techniques for processing a sheet such as nonwoven fabric have been proposed in which the sheet is introduced into the nip between a counterrotating pair of rolls having teeth on their periphery in mesh with each other as disclosed in JP 2002-501127A, JP 2001-328191A, JP 2004-174234A, US-B1-6 953 510 or WO 2004/020174.

When a sheet is processed by passing through a pair of toothed rolls as in these techniques, the rolls must rotate in mesh. Involute gears have been typically used as such rolls. Involute gears are governed by the size and shape according to the standard basic rack tooth profile specified in JIS B1701. Therefore, the highest stretch ratio achievable with the involute gears is limited, and it has been difficult to impart stretchability to a sheet material or deeply corrugate a sheet material with the involute gears.

### Problem to be Solved by the Invention

The present invention is contemplated to provide a sheet processing apparatus by which a sheet can be stretched to a high stretch ratio, a process of producing a highly stretchable sheet by the stretching, and a process of producing a pull-on garment using the sheet.

### Means for Solving the Problem

The inventors have studied on toothed rolls having a tooth profile that deviates from the gear standards specified in JIS B1701. They have found as a result that processing a sheet with toothed rolls having a specific tooth profile unexpectedly achieves unprecedented stretch processing of the sheet and completed the present invention.

Based on the above finding the present invention provides a sheet processing apparatus including a pair of rolls having teeth on the peripheral surface thereof in engagement with each other. The rolls are adapted to have a sheet introduced into the nip thereof while rotating to process the sheet. The teeth of each roll are formed in parallel to the axis of the roll. The teeth on each roll have a pitch of 1.0 to 5.0 mm, a tooth thickness less than a half the pitch, and a tooth height equal to or more than the pitch.

The present invention also provides a process of producing a sheet including the step of introducing a base sheet into the nip of a pair of the rolls of the above described sheet processing apparatus while rotating the rolls to stretch the base sheet.

The present invention also provides a process of producing a pull-on garment using the sheet produced by the above described process of producing a sheet. The process includes the steps of folding a continuous length of an exterior material including the sheet in half lengthwise, joining the folded continuous length of the exterior material at prescribed intervals in the longitudinal direction to form joints, and cutting the continuous length of the exterior material along the joints into individual articles.

### Brief Description of the Drawing

Fig. 1 schematically shows an embodiment of the sheet processing apparatus of the invention and production of a sheet using the same.
Fig. 2 presents an enlarged fragmentary view of the rolls used in the embodiment.
Fig. 3 schematically illustrates a base sheet being stretched between a pair of rolls of the apparatus of the embodiment.
Fig. 4 presents schematic enlarged views of an example of a base sheet that can be used in the process of producing a sheet according to the invention, in which Fig. 4(a) is a plan view, and Fig. 4(b) is a side view.
Fig. 5 is a perspective view schematically illustrating an embodiment of the process of producing a pull-on garment according to the invention, applied to the manufacture of disposable diapers.
Fig. 6 schematically shows another embodiment of the sheet processing apparatus of the invention and production of a sheet using the same.

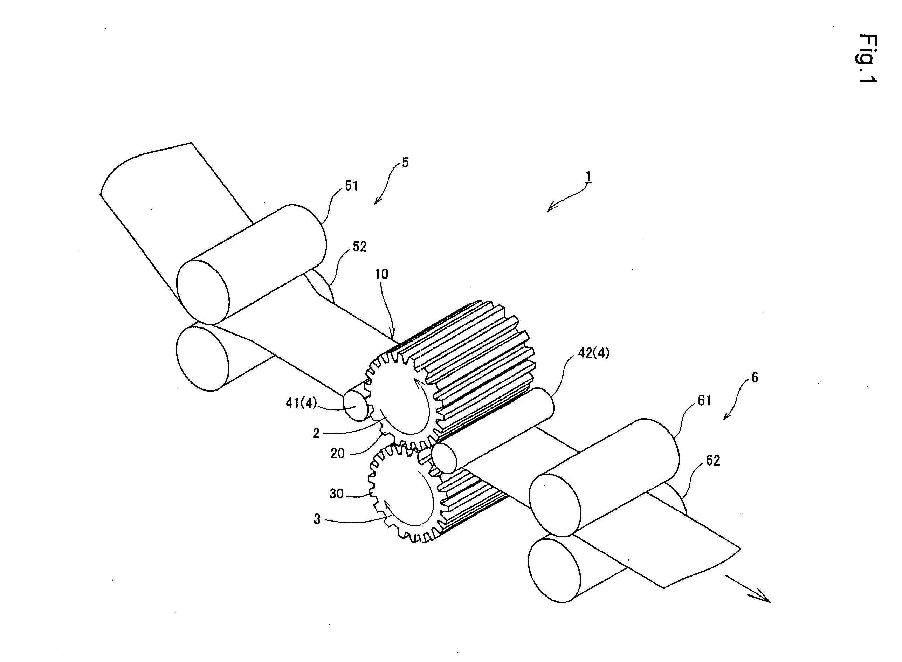

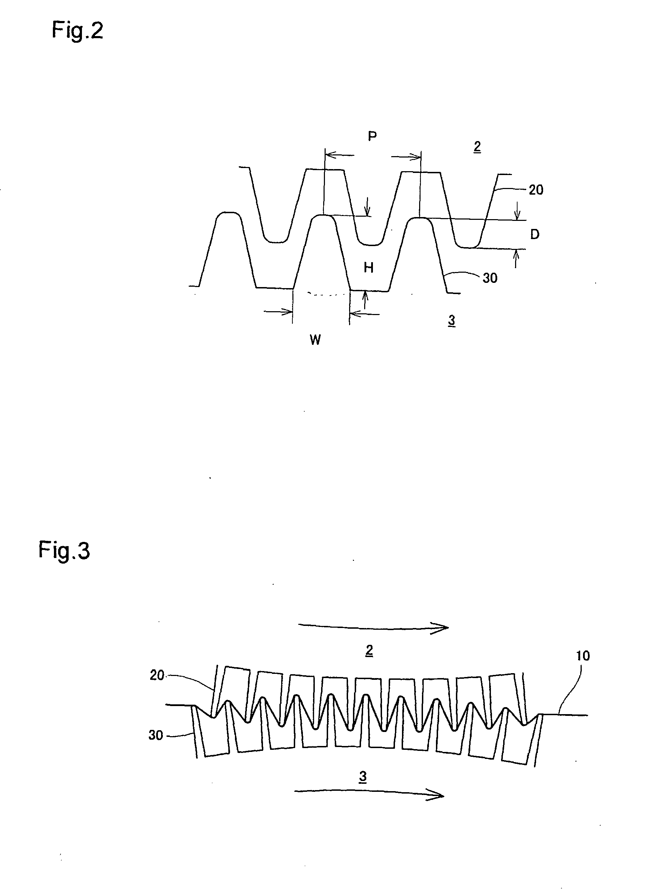

The present invention will be described based on its preferred embodiments with reference to the accompanying drawings. Figs. 1 and 2 are schematic illustrations of a preferred embodiment of the sheet processing apparatus (hereinafter simply referred to as a processing apparatus) according to the present invention.

As illustrated in Fig. 1, the processing apparatus 1 of the present embodiment has a pair of rolls 2 and 3 having teeth on their peripheral surface in engagement with each other. The processing apparatus 1 is a machine for stretching a base sheet 10 introduced into the nip of the intermeshing rolls 2 and 3 while these rolls are rotating to impart stretchability to the base sheet 10. In the processing apparatus 1 of the present embodiment, the rolls 2 and 3 have the same configuration. As illustrated in Fig. 1, the teeth are formed in parallel with the axis of each roll. The processing apparatus 1 includes slip preventing means 4 for preventing the base sheet 10 being processed form slipping in the machine direction and tensioning means 5 and 6 for applying tension to the base sheet 10 upstream and downstream the rolls 2 and 3.

As illustrated in Fig. 2, the pitch P of the teeth 20 of the roll 2 and that of the roll 3 are 1.0 to 5.0 mm. Each tooth has a thickness W of less than a half the pitch and a height H equal to or more than the pitch. When the rolls have a tooth profile within the specified ranges, unprecedentedly high stretchability is imparted to a sheet material passing between the rolls 2 and 3. The term "pitch" of teeth on a roll means a distance between the centerline of one tooth and the centerline of an adjacent tooth. The term "tooth thickness" means the thickness of one tooth. The tooth may have any shape such as rectangular, triangular or trapezoidal. The tooth thickness may not be the same over its height. For example, the tooth may be tapered toward the tip to have a trapezoidal form. Trapezoidal teeth are preferred taking into consideration the rotating properties of a pair of the intermeshing toothed rolls and the damage that may occur to a sheet material passing through the mesh. The term "tooth height" as used herein means a length from the root to the tip of each tooth.

The pitch P of the teeth on the rolls 2 and 3 is preferably 1.5 to 3.5 mm, more preferably 2.0 to 3.0 mm, in view of stretch uniformity. The tooth thickness W is preferably one-fourth to less than one-half the pitch, more preferably one-third to less than one-half the pitch, in view of the tooth strength. When the pitch is 2.0 mm, for instance, the tooth height H of each roll is preferably 2.0 mm (1.0 time the pitch) to 4.0 mm (2.0 times the pitch), more preferably 2.5 mm (1.25 times the pitch) to 3.5 mm (1.75 times the pitch), to achieve a high stretch ratio to impart stretchability to the sheet material.

The edges of the tip of the teeth 20 and 30 on each roll 2, 3 are preferably chamfered so as not to damage the sheet material. The radius curvature of the chamfered edge is preferably 0.1 to 0.3 mm.

The depth of engagement D between the teeth 20 of the roll 2 and the teeth 30 of the roll 3 is preferably 1.0 mm or more, more preferably 2.0 mm or more, in order to achieve a high stretch ratio to impart stretchability to the sheet material. The term "depth of engagement" as used here denotes the distance between the top faces of the adjacent mating teeth in mesh.

A driving force from a driving means (not shown) is transmitted to the shaft of either one of the rolls 2 and 3 to counterrotate the two rolls in meshing engagement with each other. Apart from the teeth 20 and 30, a general gear specified in JIS B1701 may be fitted as a driving gear to the shaft of each of the rolls 2 and 3. In this configuration, the rolls 2 and 3 are rotated not by interlocking between the teeth 20 of the roll 2 and the teeth 30 of the roll 3 but by transmitting a driving force to the rolls through the engagement of these gears. In this case, the teeth 20 and 30 of the respective rolls 2 and 3 are not brought into contact. The rolls 2 and may also be rotated by providing each of them with respective driving means (not shown) for independently transmitting a driving force to the rolls 2 and 3 and controlling the driving means so that the teeth 20 and the teeth 30 may not come into contact. In order to stretch the sheet material uniformly, it is preferred that the rolls 2 and 3 be rotated without contact between their teeth 20 and 30.

As illustrated in Fig. 1, the slip preventing means 4 has rolls 41 and 42 in contact with the roll 2. The rolls 41 and 42 are constituted of respective rubber rolls and are pressed on their peripheral surface onto the roll 2 thereby to control slip and shrinkage of the base sheet 10 passing between the rolls 2 and 3. The rolls 41 and 42 may be arranged to have their peripheral surface pressed onto the roll 3 to produce the same effects. Another example of the slip preventing means 4 is a structure in which one of the rolls has suction passageways open on its periphery and is equipped with a suction means for sucking the processed sheet material through the suction passageways thereby to suppress slip and shrinkage of the sheet material. To prevent slip of the sheet material being processed, it is also preferred that the tip of the teeth of both of, or either one of, the rolls 2 and 3 is textured by surface treatment or machining to have an increased frictional coefficient. The texturing is preferably effected on a part or the whole of the tip of the teeth, on which the sheet material is wrapped.

In the present embodiment, the tensioning means 5 has a pair of tension rolls 51 and 52 disposed upstream of the rolls 2 and 3, and the tensioning means 6 has a pair of tension rolls 61 and 62 disposed downstream of the rolls 2 and 3.

The processing apparatus 1 has control means (not shown). The control means controls the driving means and the slip preventing means 4 according to a predetermined sequence of movement.

The processing apparatus 1 having the rolls 2 and 3 accomplishes stretch processing to a high stretch ratio, preferably a stretch ratio of 50% (1.5 times) or more (400% (5.0 times) or less), more preferably 150% (2.5 times) or more (350% (4.5 times) or less), even more preferably 200% (3.0 times) to 300% (4.0 times). The term "stretch ratio" as used herein refers to (length of material after being stretched by the engagement of toothed rolls - length of material before being stretched by the engagement of toothed rolls) /(length of material before being stretched by the engagement of toothed rolls) x 100 (%). The figures (times) in the parentheses following the stretch ratios (%) are another representation of a degree of stretch calculated by dividing a stretch ratio by 100 and adding to the quotient 1 as the length of the material before being stretched.

An embodiment of the process of producing a sheet according to the invention will be described with reference to the production of a sheet including the step of processing a base sheet using the processing apparatus 1 of the above described embodiment.

A base sheet 10 is introduced into the nip between a pair of rotating and intermeshing rolls 2 and 3 of the processing apparatus 1 as illustrated in Fig. 1 and stretched between the rolls 2 and 3 as shown in Fig. 3.

To impart stretchability to the base sheet 10 more effectively, it is preferred to feed the base sheet 10 between the rolls 2 and 3 while applying tension by the tension rolls 51 and 52 to the base sheet 10 before being processed. The tension to be applied to the base sheet 10 to be fed is preferably 10% to 80%, more preferably 20% to 70%, of the breaking stress of the base sheet before being processed.
While the processed base sheet 10 is withdrawn from between the rolls, it is preferred for the same purpose as above to apply tension to the processed base sheet 10 by the tension rolls 61 and 62. The tension to be applied to the base sheet 10 is preferably 5% to 80%, more preferably 10% to 70%, of the breaking stress of the base sheet after being processed. The breaking stress of a material after stretch processing between toothed rolls is smaller than that before the processing. Besides, the processed sheet 10 having been rendered stretchable by the stretch processing between toothed rolls stretches easily under slight tension. It is preferred for these considerations that the tension applied to the base sheet 10 after processing be weaker than that before processing.

Although the base sheet 10 to be processed is not particularly limited in material, stretch nonwoven fabric is preferred to produce more effect of the stretch processing using the processing apparatus 1. Particularly preferred stretch nonwoven fabric is stretch composite nonwoven fabric having an elastic fiber layer and a substantially inelastic, inelastic fiber layer disposed on at least one side of the elastic fiber layer. The two fiber layers are joined to each other all over the area by fusion bonding at fiber intersections while the constituent fibers of the elastic fiber layer retain their fibrous form, with part of the constituent fibers of the inelastic fiber layer entering the elastic fiber layer and/or part of the constituent fibers of the elastic fiber layer entering the inelastic fiber layer. More preferred is stretch composite nonwoven fabric having been embossed to enhance the bonding strength between the elastic fibers and the inelastic fibers.

The inelastic fiber layer preferably has a thickness 1.2 to 20 times that of the elastic fiber layer. The elastic fiber layer preferably has a higher basis weight than the inelastic fiber layer. The diameter of the fibers constituting the elastic fiber layer is preferably 1.2 to 5 times that of the fibers constituting the inelastic fiber layer and preferably ranges from 10 to 100 µm.

The elastic fiber layer is preferably formed of fibers of thermoplastic elastomers such as styrene elastomers, polyolefin elastomers, polyester elastomers and polyurethane elastomers. The inelastic fiber layer is preferably formed of staple fibers of polyethylene (PE), polypropylene (PP), polyester (e.g., PET or PBT), polyamide, and so forth.

A highly stretchable sheet having an elongation of 100% to 160% (under a load of 100 cN/25 mm) can be produced in a continuous manner by stretching a base sheet having the above-mentioned structure at a high stretch ratio exceeding 200% by means of the processing apparatus 1. The term "elongation" as used herein refers to (length of material after tensile load application - length of material before tensile load application)/(length of material before tensile load application) x 100 (%).

Besides the above described base sheet 10, it is also preferred for obtaining high stretchability to use the following laminate sheet and single-layer fiber sheet as a base sheet.

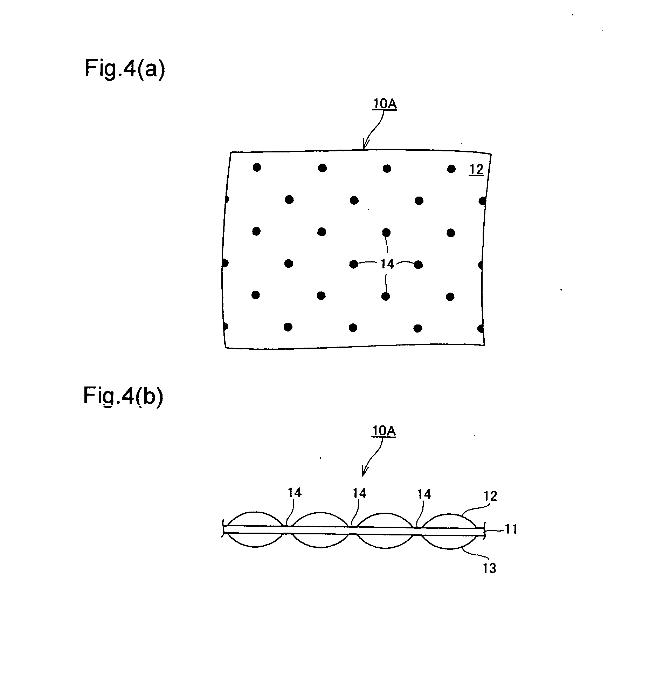

The laminate sheet is exemplified by a laminate sheet 10A shown in Figs. 4(a) and 4(b), which has a first fiber layer 11 having elastic stretchability (elastic layer) and a second and a third substantially inelastic fiber layer 12 and 13 (inelastic fiber layers) superposed on the respective sides of the first fiber layer 11. The three layers are joined in parts in a regular pattern.

The laminate sheet 10A is prepared as follows. A fiber web (third fiber layer) is continuously fed from a first carding machine in one direction (MD). Elastic fibers formed in a fiber forming unit are fed on the fiber web to form a layer (first fiber layer) of the elastic fibers in a continuous manner. A fiber web (second fiber layer) fed from a second carding machine is continuously fed on the first fiber layer. The resulting stack of three layers is subjected to a hot air treatment in a through-air system drier. The hot air treated laminate sheet is heat embossed through an embossing unit including an embossing roll having embossing projections regularly arranged on its peripheral surface and an anvil roll facing to the embossing roll. There is thus obtained the laminate sheet 10A having bonds 4 in a regular pattern as illustrated in Fig. 4.

In the above described process of making a laminate sheet, the hot air treatment in the drier is for causing the elastic fibers and the inelastic fibers to be fusion bonded and to mutually enter the adjoining fiber layer. The hot air treatment may be omitted.

The first fiber layer (elastic layer) 11 has the ability of extending under tension and contracting when released from the tension. When the first fiber layer 11 is 100% elongated in at least one direction parallel to its plane and then contracted; the residual strain is preferably 20% or less, more preferably 10% or less. It is desirable that the first fiber layer 11 has the recited residual strain in at least one of the MD and CD, particularly preferably in both the MD and CD. The maximum elongation is preferably 30% to 500%, more preferably 300% to 500%.

The first fiber layer (elastic layer) 11 preferably contains elastic fibers made from an elastic material. Elastic materials include thermoplastic elastomers, rubber, and ethylene-propylene copolymers. Thermoplastic elastomers are preferred of them because they are relatively easily converted into elastic fibers. Examples of the thermoplastic elastomers include polyurethane elastomers, styrene elastomers (e.g., SBS, SIS, SEBS, and SEPS), olefin elastomers (e.g., ethylene, propylene or butene copolymers), vinyl chloride elastomers, and polyester elastomers. These elastomers may be used either individually or in combination of two or more thereof.

The proportion of the elastic fibers made from an elastic material in the first fiber layer 11 is preferably 50% to 100% by weight, more preferably 75% to 100% by weight. The elastic fiber resin of the first fiber layer 11 may contain an inelastic resin, e.g., polyethylene, polypropylene, polyester (e.g., PET or PBT) or nylon, an organic or inorganic pigment, and various additives (e.g., an antioxidant or a plasticizer). The first fiber layer may contain inelastic fibers and an organic or inorganic pigment.
The elastic layer may be a film or a net instead of the fiber layer. The film or net can be made from the above enumerated elastic materials.

The second and third fiber layers (inelastic fiber layers) 12 and 13 are extensible but substantially inelastic. The term "extensible" as used herein is intended to include not only a fiber layer whose constituent fibers *per se* are extensible but also a fiber layer whose constituent fibers are not *per se* extensible but which shows extensibility as a result of debonding of constituent fibers that have been fusion bonded at their intersections, change of three-dimensional structures formed of a plurality of constituent fibers fusion-bonded to one another, or breaks of the constituent fibers.

Fibers constituting the inelastic fiber layers include those made of polyethylene, polypropylene, polyester (e.g., PET or PBT), nylon, or a biodegradable resin (e.g., polylactic acid). The fibers constituting the inelastic fiber layers may be staple fibers or continuous fibers and hydrophilic or water repellent. Sheath-core conjugate fibers, splittable fibers, modified cross-section fibers, crimped fibers, and heat shrunken fibers are also useful. These fibers may be used either individually or in combination of two or more thereof. Although staple fibers are apt to cause fuzzing when stretched, the above-described process hardly induce destruction of the bonds even where staple fibers are used. Therefore, using staple fibers is preferred as providing a stretch sheet having high strength, resistance to fuzzing, and a good feel to the touch.

The bonds 14 are preferably arranged discretely in both the machine direction (MD) and the direction perpendicular to the MD (i.e., CD) of the laminate sheet 10A, for example, as illustrated in Fig. 4(b). It is preferred that the second fiber layer 12 and/or the third fiber layer 13 have recesses at the bonds 14 and protrusions at regions other than the bonds 14 so as to provide a stretch nonwoven fabric (stretch sheet) with a pleasant feel to the touch.

The single layer fiber that can be used as a base sheet 10 is exemplified by a single-ply fibrous sheet containing an elastic component and a substantially inelastic component and having embossed regions in parts. Examples of such a fibrous sheet include (1) a fiber web or a nonwoven fabric prepared by various processes which are made of sheath-core conjugate fibers having an elastic component as a core and a substantially inelastic component as a sheath or side-by-side conjugate fibers or splittable conjugate fibers having an elastic component and a substantially inelastic component and which are embossed to form embossed regions in the same pattern as in the above embodiment and (2) a fiber web or a nonwoven fabric prepared by various processes which are made of a blend of elastic fibers and inelastic fibers and embossed to form embossed regions in the same pattern as in the above embodiment. Specific examples of the fibrous sheet include a carded fiber web, a spun-bonded or melt-blown fiber web, a hydroentangled fiber web or a needle-punched fiber web each embossed with a heat roll to have a large number of fusion bonds in a discrete dot pattern in a plan view.
The elastic component is exemplified by the above-described materials constituting the elastic fibers. The substantially inelastic component is exemplified by the above described materials constituting the inelastic fibers.

As described, the processing apparatus 1 of the present embodiment and the process of producing a sheet using the apparatus make it possible to stretch a base sheet 10 to a high stretch ratio simply by passing the base sheet 10 between the intermeshing rolls 2 and 3 to produce a stretch sheet exhibiting high stretchability as a result of the stretch processing. Since the processing apparatus of the present embodiment achieves excellent stretch processing by passing a base sheet therethrough only once, the resulting sheet as processed may be fed directly to the line of manufacturing an applied product.

The process of producing a pull-on garment according to the present invention will then be described with reference to its preferred embodiment in which the process is applied to the production of disposable pull-on diapers (hereinafter simply "diaper(s)").

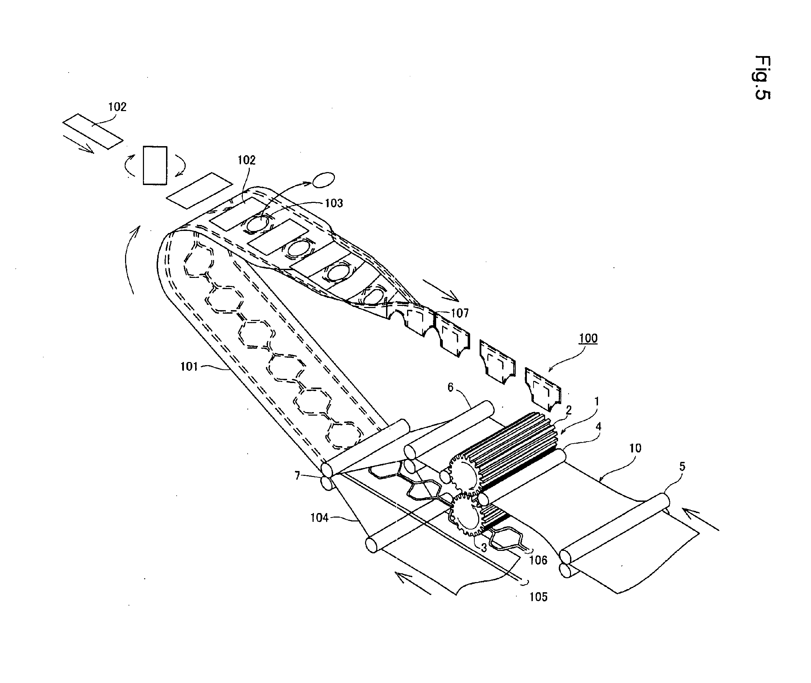

As shown in Fig. 5, the process of producing a diaper according to the present embodiment is to manufacture a diaper 100 using a sheet 10 obtained by the aforementioned process of producing a sheet, i.e., a stretch-processed sheet. The diaper 100 is manufactured in the same manner as in the conventional manufacture of disposable pull-on diapers in which diaper precursors run on the line with their lateral direction coincident with the machine direction, except for the use of the sheet 10 of continuous form.

The process of producing a diaper according to the present embodiment includes the step of forming a continuous form exterior laminate 101 including the sheet 10, the step of placing absorbent bodies 102 on the continuous form exterior laminate 101, the step of forming leg holes 103 in the continuous form exterior laminate 101, the step of folding the continuous form exterior laminate 101 and the absorbent bodies 102 in half lengthwise, the step of joining the folded, continuous form exterior laminate 101 at prescribed intervals in the longitudinal direction to form joints, and the step of cutting the continuous form exterior laminate along the joints into individual articles.

In the step of forming a continuous form exterior laminate 101, the sheet 10 as an outer sheet and an inner sheet 104, which is to face the skin, are joined to form the exterior laminate 101 of continuous form. In the present embodiment, waist elastic members 105 and leg elastic members 106 are fed between the two sheets and fixed there in their stretched state when the sheets are joined together. More specifically, an adhesive for fixing the waist elastic members 105 and the leg elastic members 106 is applied to prescribed parts of one or both of the facing sides of the two sheets before the sheets are superposed on each other. Then, the two sheets of continuous form having the elastic members sandwiched therebetween are pressed between nip rolls 7.

The sheet 10 and the inner sheet 104 are not bonded to each other in the most part of the stomach portion, back portion, and crotch portion of the diaper 100. Specifically, the sheet 10 and the inner sheet 104 are bonded to each other along the lateral side edges of the stomach and the back portions by heat sealing, high frequency sealing, ultrasonic sealing or a like technique and along the waist opening and pair of leg openings with an adhesive such as a hot melt adhesive. They are also bonded to each other along the longitudinal centerline in the stomach, the back, and the crotch portions. They are not bonded in other parts.

The inner sheet 104 is preferably a sheet having extensibility but no contractibility in the longitudinal direction. The maximum elongation of the inner sheet 104 in the longitudinal direction is preferably 100% or more. Examples of a sheet having extensibility but no contractibility in the longitudinal direction include those described in JP 8-508789A and JP 2000-513054A. The inner sheet 104 may be a stretchable sheet like the base sheet 10 having been stretched by the rolls 2 and 3. A laminate sheet obtained by joining a continuous-form first sheet in a stretched state and a continuous form second sheet in a substantially non-stretched state as described in Japanese Patent Application No. 2006-207596, paras. [0021]-[0027] may also be used as the inner sheet.

The waist elastic members 105 are disposed at the positions corresponding to the waist portion of a diaper along both edges of the exterior laminate 101 and fixed with an adhesive. The leg adhesive members 106 are arranged along the shape of a leg hole 103 that is to be made in the subsequent step and the crotch portion of a diaper and fixed with an adhesive. The leg elastic members 106 are introduced between the two sheets of continuous length while swinging in the direction perpendicular to the running direction of the sheet 10 and the inner sheet 104 as guided by a known swinging guide (not shown). Any elastic member that has been conventionally used in this type of articles can be used as the waist elastic member 105 and the leg elastic member 106. Examples of preferred waist elastic member 105 and leg elastic member 106 include stretchable materials, such as natural rubber, polyurethane resins, foamed urethane resins, and hot-melt stretch materials, in the form of elastic thread or tape.

In the step of placing absorbent bodies 102, the absorbent bodies 102 having an adhesive such as a hot-melt adhesive applied thereon are successively turned 90° and fixedly disposed on the inner sheet 104 of the continuous form exterior laminate 101 length at a given spacing.

The absorbent body 102 is composed of a liquid permeable topsheet, liquid impermeable or repellent backsheet, and a liquid retentive absorbent core interposed therebetween and has a substantially oblong shape. The topsheet, backsheet, and absorbent core can be chosen from those commonly used in this type of articles. A preferred example of the absorbent core is an aggregate of a particulate superabsorbent polymer and a fibrous material, wrapped in tissue paper (not shown).

In the step of forming leg holes, the inside of every loop formed of the leg elastic members 106 fixed to the continuous form exterior laminate 101 having the absorbent bodies 102 disposed thereon is cut out to form leg holes 103. Cutting techniques commonly employed in the manufacture of this type of articles can be adopted, such as cutting with a rotary cutter or a laser cutter. The step of forming leg holes may precede the step of placing the absorbent bodies 102.

In the step of folding, both edge portions of the continuous form exterior laminate 101 are folded inward over the waist elastic members 105 and the longitudinal ends of the absorbent bodies 102. Then, the continuous form exterior laminate 101 and the absorbent bodies 102 are folded as a unit in half.

In the step of joining, the continuous form exterior laminate 101 folded in half as a unit with the individual absorbent bodies 102 is joined to itself at a prescribed interval in the longitudinal direction to form joints 107 corresponding to side seals of a diaper. The joining to form the joints 107 can be carried out by any technique chosen from those commonly employed in the manufacture of this type of articles, such as heat sealing, ultrasonic sealing, and high frequency sealing.

In the step of cutting, the exterior laminate 101 of continuous form is cut approximately along the centerline of every joint 107 formed in the preceding step of joining into the individual diapers 100. The cutting can be carried out by any technique chosen from those commonly used in the manufacture of this type of articles.

According to the process of producing a diaper of the present embodiment, since the sheet 10 having high stretchability is used, a pull-on garment with good fit and feel can be produced with advantage.. Since the stretch-processed sheet 10 can be fed directly to a line of diaper manufacture, there is no need to greatly alter the existing diaper manufacturing flow.

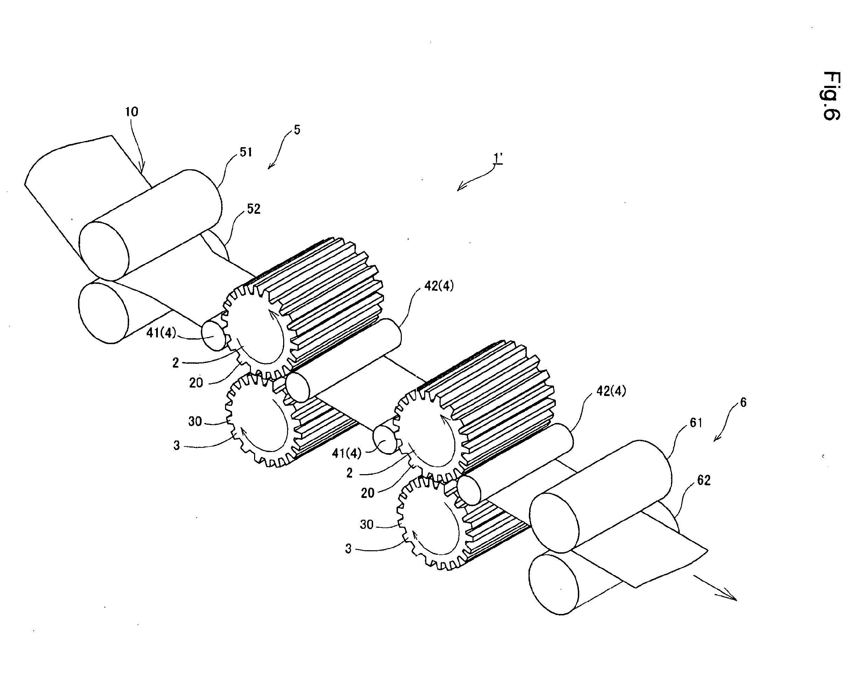

The present invention is not limited to the foregoing embodiments.
For example, the sheet processing apparatus may have a plurality of pairs of rolls 2 and 3 arranged in series in the MD as in the processing apparatus 1' illustrated in Fig. 6 in which two pairs are provided. Further increased stretchability can be imparted to the base sheet 10 by repeating the stretch processing by passage between these pairs of rolls 2 and 3.

While the processing apparatus of the invention and the process of sheet production using the apparatus are especially suited to the production of a stretch sheet using the above-described nonwoven fabric as a base sheet, they are applicable as well to stretch-processing a base sheet other than the nonwoven fabric. Examples of the other base sheets include other types of nonwoven fabric, paper, resin films, and composites thereof. The sheet thus stretch-processed can be processed to have stretchability or to be shaped in three dimensions, e.g., textured.

If desired, the processing apparatus of the invention may be equipped with temperature controlling means for controlling the temperature of the rolls, such as a heater for heating the rolls. One of the rolls may have suction passageways open on its periphery and connected to a suction mechanism so that the roll may suck and carry a processed sheet.

### Examples

The present invention will now be illustrated in greater detail with reference to Examples.
Apparatus having rolls described below were used. The base sheet described below was passed once between the rolls under the conditions described below. The elongation of the thus processed sheet under load was measured in accordance with the method described below. The results obtained are shown in Table 1.

### Example 1

### (1) Toothed roll geometry and depth of engagement (common to two rolls)

Tooth pitch: 2 mm
Tooth thickness: 0.7 mm (at root), 0.525 mm (at tip)
Tooth height: 3.5 mm
Pitch circle diameter (PCD): 150 mm
Depth of engagement: 2.7 mm (the two rolls counterrotate with their teeth in contact intermeshing relation)

### (2) Base sheet

A stretch composite nonwoven fabric was used as a base sheet, which was prepared by through-air bonding an elastic fiber layer made of elastic fiber described below and an inelastic fiber layer made of inelastic fiber described below on each side of the elastic fiber layer.
Elastic fiber: thermoplastic styrene elastomer fiber; fiber diameter: 30 µm
Basis weight of elastic fiber layer: 40 g/m²
Inelastic fiber: PE/PET sheath/core conjugate fiber; fiber thickness: 2 dtex
Basis weight of inelastic fiber layer: 10 g/m²
Basis weight of composite sheet: 60 g/m²

### (3) Processing conditions

Tension applied to base sheet before processing: 500 cN/100 mm width
Tension applied to base sheet after processing: 200 cN/100 mm width

### (4) Measurement of elongation

A specimen measuring 25 mm in width and 75 to 100 mm in length was cut out of a processed sheet and set on a tensile tester at an initial jaw spacing of 50 mm with the machine direction of the specimen coinciding with the pulling direction. The specimen was pulled by a load cell at a rate of 30 m/min to determine load-elongation characteristics. The measurement was repeated using three specimens per sheet to obtain an average curve. The elongation under 100 cN/25 mm load was taken as a measure for evaluation.

### Example 2

A sheet was processed in the same manner as in Example 1, except for changing the depth of engagement of the toothed rolls to 3.0 mm.

### Example 3

A sheet was processed in the same manner as in Example 1, except that the rolls were rotated by means of gears with no contact between the toothed rolls.

### Comparative Example 1

A sheet was processed in the same manner as in Example 1, except for using an apparatus equipped with a pair of toothed rolls the teeth of which had a conventional involute gear profile described below. The results obtained are shown in Table 1.
Toothed roll geometry and depth of engagement
Modules of teeth: 0.75 mm
Tooth thickness, height, and pitch are regulated by the modules in accordance with JIS B1701.

PCD: 150 mm
Depth of engagement: 0.75 mm

**Table 1**

| | Tooth Pitch (mm) | Depth of Engagement D (mm) | Stretch Distance (mm) | Stretch Ratio | | Elongation (%) |
|---|---|---|---|---|---|---|
| | | | | (%) | (time) | |
| Example 1 | 2.00 | 2.7 | 6.14 | 207 | 3.07 | 103 |
| Example 2 | 2.00 | 3.0 | 6.73 | 237 | 3.37 | 115 |
| Example 3 | 2.00 | 2.7 | 6.14 | 207 | 3.07 | 106 |
| Comp. Example 1 | 2.00 | 1.5 | 4.46 | 89 | 1.89 | 30 |

As shown in Table 1, a highly stretchable sheet was obtained by a single pass through the rolls in Examples 1 to 3. In contrast, the sheet processed by the apparatus of Comparative Example 1 had an elongation less than one-third the values of the sheets of Examples. It is also seen that, since a sheet material is stretched evenly when the rolls rotate with contact meshing engagement, the sheet was stretched in Examples 1 and 2 slightly more than in Example 3 in which the rolls rotate with no contact with each other.

### Industrial Applicability

The sheet processing apparatus and sheet production process according to the present invention enable advantageous sheet processing to impart unprecedentedly high stretchability or a three-dimensional shape such as a deep corrugation. The process of producing a pull-on garment, which uses a sheet material having been processed to exhibit high stretchability, enables advantageous manufacture of a pull-on garment with a good fit and feel.

The sheet processing apparatus and sheet production process of the present invention will enjoy wide applications to a variety of industrial fields in accordance with the type of sheeting to be processed. They are useful in the manufacture of various articles including absorbent articles such as disposable diapers and sanitary napkins, clothing, and medical articles such as bandages and packs. The present invention is particularly well suited for the production of pull-on type absorbent articles such as disposable pull-on diapers, pants type sanitary napkins, and pants type incontinence pads. The present invention is also suited to the production of other pull-on type garments having no absorbent body or core, such as sanitary undergarments and other pull-on garments.

## Claims

1. A sheet processing apparatus comprising a pair of rolls having teeth on the peripheral surface thereof in engagement with each other, the rolls being adapted to have a base sheet introduced into the nip thereof while rotating to process the base sheet,
the teeth of each roll being in parallel to the axis of the roll, and
the teeth on each roll having a pitch of 1.0 to 5.0 mm, a tooth thickness at the foot of less than a half the pitch, and a tooth height equal to or more than the pitch.

2. The sheet processing apparatus according to claim 1, wherein the rolls have a depth of engagement of 1.0 mm up to the tooth height.

3. The sheet processing apparatus according to claim 1, further comprising slip preventing means for preventing the base sheet being fed between the pair of rolls from slipping in the machine direction.

4. The sheet processing apparatus according to any one of claims 1 to 3, which is configured to stretch the base sheet.

5. The sheet processing apparatus according to claim 4, wherein the stretching is to a stretch ratio of 50% to 400%.

6. A process of producing a sheet comprising the steps of introducing a base sheet into the nip of a pair of the rotating rolls of the sheet processing apparatus of any one of claims 1 to 3 to stretch the base sheet.

7. The process of producing a sheet according to claim 6, wherein the pair of rolls comprises a plurality of pairs of rolls arranged in the machine direction, and the base sheet is repeatedly stretched.

8. The process of producing a sheet according to claim 6 or 7, wherein tension is applied to the base sheet before being processed while it is introduced into the nip of the rolls.

9. The process of producing a sheet according to any one of claims 6 to 8, wherein tension is applied to the base sheet after being processed while it is withdrawn from between the rolls.

10. The process of producing a sheet according to claim 9, wherein the tension applied to the base sheet after being processed is weaker than the tension applied to the base sheet before being processed.

11. The process of producing a sheet according to any one of claims 6 to 10, wherein the base sheet comprises nonwoven fabric, and the stretching is to impart stretchability to the base sheet in the running direction of the base sheet.

12. A process of producing a pull-on garment using a sheet produced by the process of producing a sheet according to claim 6, comprising the steps of:
folding a continuous form exterior material comprising the sheet having been stretched in half lengthwise,
joining the folded continuous form exterior material at prescribed intervals in the longitudinal direction to form joints, and
cutting the continuous form exterior material along the joints into individuals.

13. The process of producing a pull-on garment according to claim 12, further comprising the step of forming the continuous form exterior material in which the sheet as a member of the exterior material is joined to an inner sheet adapted to be disposed on the skin facing side of the exterior material.

14. The process of producing a pull-on garment according to claim 13, further comprising the step of placing absorbent bodies in which absorbent bodies are placed on the inner sheet of the continuous form exterior material before the step of folding.

## Patentansprüche

1. Bahnwaren-Bearbeitungsvorrichtung mit einem Paar Walzen mit Zähnen auf ihren Umfangsflächen in gegenseitigem Eingriff, wobei die Walzen geeignet sind, eine Rohbahnware in ihren Spalt einführen zu lassen, während sie drehen, um die Rohbahnware zu bearbeiten,
wobei die Zähne jeder Walze parallel zur Achse der Walze sind und
die Zähne auf jeder Walze einen Abstand von 1,0 bis 5,0 mm, eine Zahndicke am Fuß, die kleiner als der halbe Abstand ist, und eine Zahnhöhe haben, die mindestens gleich dem Abstand ist.

2. Bahnwaren-Bearbeitungsvorrichtung nach Anspruch 1, wobei die Walzen eine Eingriffstiefe von 1,0 mm bis zur Zahnhöhe haben.

3. Bahnwaren-Bearbeitungsvorrichtung nach Anspruch 1, ferner mit einer Rutschen verhindernden Einrichtung zum Verhindern, dass die zwischen das Walzenpaar geführte Rohbahnware in Maschinenrichtung rutscht.

4. Bahnwaren-Bearbeitungsvorrichtung nach einem der Ansprüche 1 bis 3, die so konfiguriert ist, dass sie die Rohbahnware reckt.

5. Bahnwaren-Bearbeitungsvorrichtung nach Anspruch 4, wobei das Recken mit einem Reckverhältnis von 50 % bis 400 % erfolgt.

6. Verfahren zur Herstellung einer Bahnware mit den Schritten: Einführen einer Rohbahnware in den Spalt eines Paars der rotierenden Walzen der Bahnwaren-Bearbeitungsvorrichtung nach einem der Ansprüche 1 bis 3, um die Rohbahnware zu recken.

7. Verfahren zur Herstellung einer Bahnware nach Anspruch 6, wobei das Walzenpaar mehrere in Maschinenrichtung angeordnete Walzenpaare aufweist und die Rohbahnware wiederholt gereckt wird.

8. Verfahren zur Herstellung einer Bahnware nach Anspruch 6 oder 7, wobei Zugspannung auf die Rohbahnware vor Bearbeitung ausgeübt wird, während sie in den Spalt der Walzen eingeführt wird.

9. Verfahren zur Herstellung einer Bahnware nach einem der Ansprüche 6 bis 8, wobei Zugspannung auf die Rohbahnware nach Bearbeitung ausgeübt wird, während sie aus dem Raum zwischen den Walzen entnommen wird.

10. Verfahren zur Herstellung einer Bahnware nach Anspruch 9, wobei die auf die Rohbahnware nach Bearbeitung ausgeübte Zugspannung schwächer als die auf die Rohbahnware vor Bearbeitung ausgeübte Zugspannung ist.

11. Verfahren zur Herstellung einer Bahnware nach einem der Ansprüche 6 bis 10, wobei die Rohbahnware Vlies aufweist und das Recken dazu dient, der Rohbahnware Dehnbarkeit in Laufrichtung der Rohbahnware zu verleihen.

12. Verfahren zur Herstellung eines Überziehkleidungsstücks mit Hilfe einer durch das Verfahren zur Herstellung einer Bahnware nach Anspruch 6 hergestellten Bahnware mit den Schritten:
der Länge nach zur Hälfte erfolgendes Falten eines Außenmaterials mit kontinuierlicher Form, das die gereckte Bahnware aufweist,
Verbinden des gefalteten Außenmaterials mit kontinuierlicher Form in vorgeschriebenen Abständen in Längsrichtung, um Verbindungsstellen zu bilden, und
Schneiden des Außenmaterials mit kontinuierlicher Form entlang der Verbindungsstellen in Einzelteile.

13. Verfahren zur Herstellung eines Überziehkleidungsstücks nach Anspruch 12, ferner mit dem Schritt: Bilden des Außenmaterials mit kontinuierlicher Form, in dem die Bahnware als Teil des Außenmaterials mit einer Innenbahnware verbunden wird, die geeignet ist, auf der zur Haut weisenden Seite des Außenmaterials angeordnet zu sein.

14. Verfahren zur Herstellung eines Überziehkleidungsstücks nach Anspruch 13, ferner mit dem Schritt: Platzieren von Absorptionskörpern, wobei Absorptionskörper auf der Innenbahnware des Außenmaterials mit kontinuierlicher Form vor dem Schritt des Faltens platziert werden.

## Revendications

1. Appareil de traitement de feuille en continu comprenant une paire de rouleaux possédant des dents sur la surface périphérique de ceux-ci en prise les unes avec les autres, les rouleaux étant adaptés pour avoir une feuille de base introduite dans la ligne de contact de ceux-ci alors qu'ils tournent pour traiter la feuille de base,
les dents de chaque rouleau étant en parallèle à l'axe du rouleau, et
les dents sur chaque rouleau possédant un pas de 1,0 à 5,0 mm, une épaisseur de dent au pied inférieure à la moitié du pas, et une hauteur de dent égale ou supérieure au pas.

2. Appareil de traitement de feuille en continu selon la revendication 1, dans lequel les rouleaux possède une profondeur de prise de 1,0 mm jusqu'à la hauteur de dent.

3. Appareil de traitement de feuille en continu selon la revendication 1, comprenant en outre des moyens anti-glissements destinés à empêcher la feuille de base distribuée entre la paire de rouleaux de glisser dans le sens machine.

4. Appareil de traitement de feuille en continu selon l'une quelconque des revendications 1 à 3, qui est configuré pour étirer la feuille de base.

5. Appareil de traitement de feuille en continu selon la revendication 4, dans lequel l'étirage est jusqu'à un rapport d'étirage de 50 % à 400 %.

6. Procédé de fabrication d'une feuille en continu comprenant les étapes consistant à introduire une feuille de base dans la ligne de contact d'une paire des rouleaux rotatifs de l'appareil de traitement de feuille selon l'une quelconque des revendications 1 à 3 pour étirer la feuille de base.

7. Procédé de fabrication d'une feuille en continu selon la revendication 6, dans lequel la paire de rouleaux comprend une pluralité de paires de rouleaux agencées dans le sens machine, et la feuille de base est étirée à plusieurs reprises.

8. Procédé de fabrication d'une feuille en continu selon la revendication 6 ou 7, dans lequel une tension est appliquée sur la feuille de base avant d'être traitée alors qu'elle est introduite dans la ligne de contact des rouleaux.

9. Procédé de fabrication d'une feuille en continu selon l'une quelconque des revendications 6 à 8, dans lequel une tension est appliquée sur la feuille de base après avoir été traitée alors qu'elle est retirée d'entre les rouleaux.

10. Procédé de fabrication d'une feuille en continu selon la revendication 9, dans lequel la tension appliquée sur la feuille de base après avoir été traitée est plus faible que la tension appliquée sur la feuille de base avant d'être traitée.

11. Procédé de fabrication d'une feuille en continu selon l'une quelconque des revendications 6 à 10, dans lequel la feuille de base comprend un tissu non tissé, et l'étirage est pour fournir une aptitude à l'étirage à la feuille de base dans le sens de défilement de la feuille de base.

12. Procédé de fabrication d'un vêtement à endosser utilisant une feuille en continu fabriquée par le procédé de fabrication d'une feuille en continu selon la revendication 6, comprenant les étapes consistant à :
• plier un matériau extérieur de forme continu comprenant la feuille ayant été étirée de moitié dans le sens de la longueur,
• joindre le matériau extérieur de forme continu plié à des intervalles prescrits dans le sens longitudinal pour former des joints, et
• couper le matériau extérieur de forme continu le long des joints en morceaux individuels.

13. Procédé de fabrication d'un vêtement à endosser selon la revendication 12, comprenant en outre l'étape consistant à former le matériau extérieur de forme continu dans lequel la feuille en continu, en tant qu'élément du matériau extérieur, est jointe à une feuille intérieure adaptée pour être disposée sur le côté, qui fait face à la peau, du matériau extérieur.

14. Procédé de fabrication d'un vêtement à endosser selon la revendication 13, comprenant en outre l'étape consistant à positionner des corps absorbants, dans lequel des corps absorbants sont positionnés sur la feuille intérieure du matériau extérieur de forme continu avant l'étape consistant à plier.
